# EUROPÄISCHE PATENTSCHRIFT

(11) **EP 0 431 027 B1**
(45) Veröffentlichungstag und Bekanntmachung des Hinweises auf die Patenterteilung: **10.02.1993**
(21) Anmeldenummer: 89909737.2
(22) Anmeldetag: 30.08.1989
(51) Int. Cl.: A01G 3/02

(54) **ROSEN-GREIFSCHERE**
GRIPPING SECATEURS FOR ROSES
SECATEUR A PREHENSION POUR COUPER LES ROSES

(30) Priorität: 31.08.1988 DE 3829577
(43) Veröffentlichungstag der Anmeldung: 12.06.1991
(73) Patentinhaber: Wolf-Geräte GmbH, D-57518 Betzdorf (DE)
(72) Erfinder: ORTHEY, Gebhard, D-5241 Nauroth (DE); RIEKEL, Helmut, D-5240 Betzdorf (DE)
(74) Vertreter: Koch, Günther, Dipl.-Ing.
(86) Internationale Anmeldenummer: EP8901019
(87) Internationale Veröffentlichungsnummer: WO9001866

(56) Entgegenhaltungen:
- DE-A- 2 937 801
- US-A- 3 336 667
- US-A- 4 117 592
- Fotografie der Rosengreifschere RS-TA der Firma Wolf-Geräte GmbH, D-5240 Betzdorf

## Beschreibung

Die Erfindung bezieht sich auf eine Rosen-Greifschere der im Oberbegriff des Patentanspruchs 1 angegebenen Gattung. Eine solche Schere wird unter der Bezeichnung RS-TA von der Firma Wolf-Geräte GmbH, Betzdorf geliefert. Die durch das Klemmstück gebildete Greifautomatik hält das Schnittgut, d.h. die Stengel, die soeben abgeschnitten wurden, fest, so daß auch mit Dornen versehene Stiele geschnitten werden können, ohne die Hände zu zerkratzen.

Bei der bekannten Schere ist das Klemmstück um den Drehzapfen der Scherenschenkel beweglich gelagert und auf einen das Schneidblatt hintergreifenden Lappen ist das eine Ende einer Blattfeder aufgenietet, die mit ihrem anderen Ende im Inneren des Scherenschenkels für den Amboß abgestützt ist. Dadurch kann sich das Klemmstück gegenüber dem Schneidblatt nach hinten bewegen und zusammen mit dem Amboß eingeklemmte Stengel festhalten. Diese Greifautomatik arbeitet zuverlässig und gewährleistet mit einem ziehenden Schnitt eine glatte schonende Schnittfläche.

Der Erfindung liegt die Aufgabe zugrunde, eine gattungsgemäße Schere bezüglich der Greifautomatik zu vereinfachen und in der Herstellung zu verbilligen, ohne daß die günstige Greifautomatik beeinträchtigt würde.

Gelöst wird die gestellte Aufgabe durch die im Kennzeichnungsteil des Patentanspruchs 1 angegebenen Merkmale.

Dadurch, daß das das Klemmstück bildende Kunststoffteil selbstfedernd ausgebildet ist, kann auf die bei der bekannten Schere erforderliche zusätzliche Blattfeder verzichtet werden. Durch entsprechende Gestaltung eines der Klemmplatte mit einer Lagerplatte verbindenden Federarms kann eine bestimmte Federcharakteristik erreicht werden. Die Montage des Klemmstücks ist äußerst einfach, weil dieses insgesamt mit dem die Scherenschenkel verbindenden Drehzapfen aufsetzbar ist und mittels einer formschlüssigen Festlegung der Lagerplatte die Halterung erreicht wird.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 eine Ansicht der erfindungsgemäßen Schere im geschlossenen und verriegeltem Zustand;
Fig. 2 eine Ansicht der Schere in Richtung des Pfeiles II gemäß Fig. 1;
Fig. 3 eine Rückansicht des Scherenkopfteils;

Die Schere weist einen ersten Handgriff (10) aus Kunststoff auf, der einen metallischen Griffhebelarm (12) umschließt, welcher im querschnitt U-förmig ausgebildet ist und sich nach oben zu zwei Lagerplatinen (14) fortsetzt, die die Schenkel des U-Querschnitts bilden und dazwischen weitere Scherenteile aufnehmen. Zwischen den beiden Lagerplatinen ist ein erstes Schneidblatt (16) eingefügt, dessen unterer Fortsatz (18) mittels eines Stiftes (20) in Löchern der Lagerplatinen (14) festgelegt ist. Ein Drehzapfen (22) stellt den zweiten Verbindungspunkt zwischen Platinen und Schneidblatt (16) dar, so daß der Handgriff (10) starr mit dem Schneidblatt (16) verbunden ist.

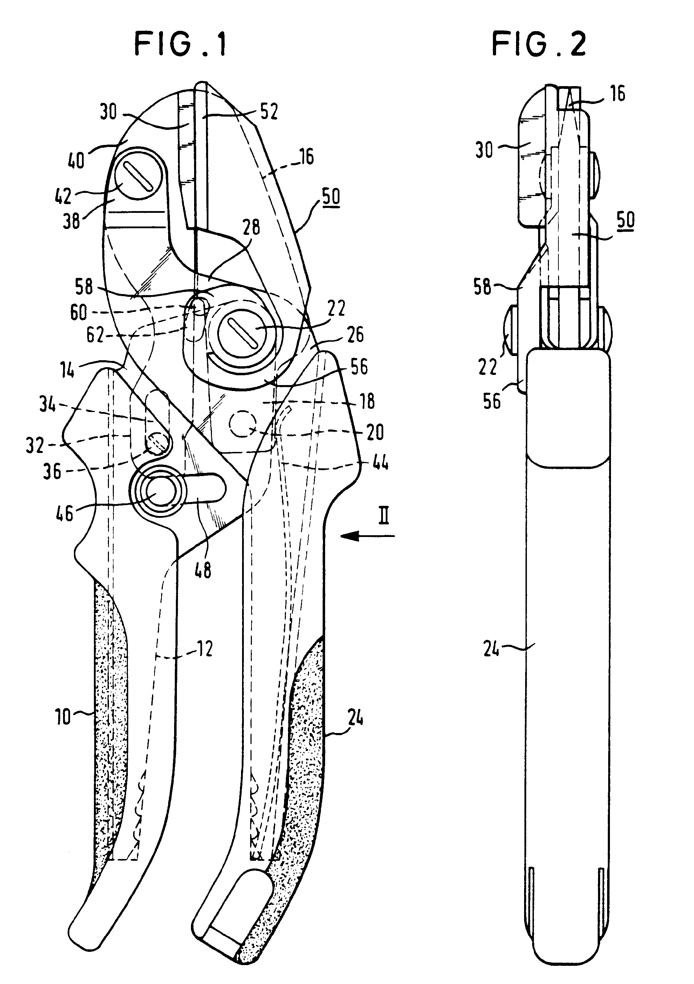

Ein zweiter Handgriff (24) umschließt einen zweiten metallischen im Querschnitt U-förmig ausgebildeten Griffhebel (26), der sich in zwei Lagerplatinen (28) fortsetzt, die die Lagerplatinen (14) umschließen. Die Gelenkverbindung der Lagerplatinen bzw. der Griffhebel erfolgt durch den Drehzapfen (22). Das zweite Schneidblatt in Gesalt eines Amboß (30) ist mit seinem unteren Fortsatz (32) zwischen den Platinen (14) des Griffhebels (12) verschiebbar geführt. Der Fortsatz weist ein Langloch (34) auf, in das ein Stift (36) einsteht, der zwischen den beiden Platinen (14) fixiert ist. Die nach innen abgekröpften Enden (38) umschließen den Amboßträgerhebel (40), und die Verbindung erfolgt über einen Gelenkzapfen (42). Eine innerhalb des zweiten Handgriffs (24) angeordnete Rückstellblattfeder (44) stützt sich mit ihrem oberen beweglichen Ende an den gemäß Fig. 1 rechts befindlichen Rand der Platinen (14) bzw. des Schneidblattfortsatzes (18) ab, wodurch die Schere in ihre Öffnungsstellung vorgespannt wird. In Schließstellung ist die Schere durch einen Schiebezapfen (46) verriegelbar, der in Langlöchern (48) der Platinen (14) geführt ist. In der in Fig. 1 dargestellten Verriegelungsstellung stützt sich das untere Ende des Fortsatzes (32) des Amboßträgerhebels (40) an dem Schiebezapfen (46) ab und hält damit die Schere entgegen der Kraft der Feder (44) in Schließstellung. Wenn der Schiebezapfen (46) in die gemäß Fig. 1 rechte Endstellung im Schlitz (48) verschoben ist, kann das untere Ende (32) am Schiebezapfen (46) vorbeigleiten und die Schere kann betätigt werden.

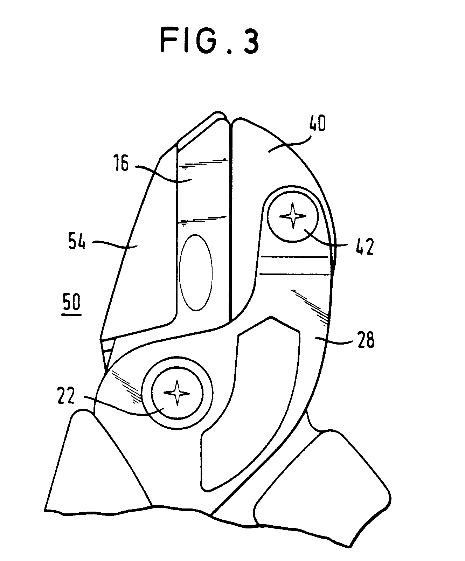

Mit dem Schneidblatt (16) ist ein Klemmstück aus elastischem Kunststoff beweglich, das eine Klemmplatte (52) trägt, die in Schließstellung dem Amboß (30) anliegt und zusammen mit diesem eine Halteklemme für abgeschnittene Stengel bildet. Dieses Kunststoffteil (50) umschließt das Schneidblatt (16) von der Rückseite her und übergreift dieses mit einem Lappen (54) (Fig. 3). Nach unten ist das Kunststoffteil (50) in einem Federarm (56) verlängert, der in einer Lagerplatte (58) ausläuft, die mit einem Loch ausgestattet ist, welches vom Drehzapfen (22) durchsetzt ist. Die Lagerplatte (58) ist mit einem angespritzten Stift (60) versehen, der durch einen Kreisbogenschlitz (62) der oberen Platine (28) in ein Loch der oberen Lagerplatine (14) eingreift und so die Lagerplatte drehfest mit dem ersten Handgriff (10) verbindet. Auf diese Weise wird erreicht, daß sich das Klemmstück (50) gegenüber dem Schneidblatt (16) nach hinten verschwenken kann, wobei über den Federarm (56) eine Klemmkraft auf die Klemmplatte (52) ausgeübt wird. Bei geschlossener Schere kann die Klemmplatte (52) demgemäß federnd gegenüber dem Amboß (30) zurückweichen und zusammen mit diesem einen Stengel festklemmen, der gerade abgeschnitten wurde.

## Patentansprüche

1. Rosen-Greifschere mit einem, mit dem ersten Handgriff (10) verbundenen Schneidblatt (16), das mit einem vom zweiten Handgriff (24) gesteuerten Amboß (30) zusammenwirkt und mit einem Klemmstück (50), das mit dem Schneidblatt (16) um einen Drehzapfen (22) beweglich ist und eine gegen den Amboß (30) federnd vorgespannte Klemmplatte (52) aufweist, dadurch gekennzeichnet, daß das Klemmstück (50) von einem selbstfedernden Kunststoffteil gebildet ist, das das Schneidblatt (16) von der Rückseite her umschließt und dieses mit einem Lappen (54) übergreift, daß das Klemmstück (50) nach unten in einen Federarm (56) verlängert ist, der in einer Lagerplatte (54) ausläuft, die mit einem Loch ausgestattet ist, welches vom Drehzapfen (22) durchsetzt ist, wodurch die Lagerplatte (54) gegenüber dem den Amboß (30) steuernden Griffhebel (26) formschlüssig festgelegt ist, und daß die Lagerplatte (58) mit einem angespritzten Stift (60) in ein Loch der Griffhebelplatine (14) des Griffhebelarms (12) des Schneidblattes (16) eingreift und so die Lagerplatte (58) drehfest mit dem ersten Handgriff (10) verbindet.

2. Rosen-Greifschere nach Anspruch 1,
dadurch gekennzeichnet, daß der Federarm (56) um die Drehachse des Drehzafens (52) bogenförmig gekrümmt ausgeführt ist.

3. Rosen-Greifschere nach Anspruch 1,
dadurch gekennzeichnet, daß der Stift (60) durch einen kreisbogenförmigen Schlitz (62) der Griffhebelplatine (28) des den Amboß (30) steuernden Griffhebels hindurchsteht.

## Claims

1. Rose pruner having a cutting blade (16) joined to the first handle (10) and cooperating with an anvil (30) controlled by the second handle (24), and having a clamping block (50) adapted to move with the cutting blade (16) about a swivel pin (22) and incorporating a clamping plate (52) which is spring-biassed with respect to the anvil (30),
characterised in that the clamping block (50) is constituted by an inherently resilient plastic part which encloses the cutting blade (16) from the rear and overlaps it with a tang (54), that the clamping block (50) is lengthened downwards into a spring arm (56) which opens out in a bearing plate (58) incorporating a hole through which the swivel pin (22) passes, thereby positively interlocking the bearing plate (58) with respect to the grip lever (26) controlling the anvil (30), and that the bearing plate (58) engages by an injected-on pin (60) into a hole in the grip lever plate (14) of the grip lever arm (12) of the cutting blade (16) and in this way connects the bearing plate (58) non-rotabably to the first handle (10).

2. Rose pruner according to claim 1,
characterised in that the spring arm (56) is bent in an arc about the rotational axis of the swivel pin (52).

3. Rose pruner according to claim 1,
characterised in that the pin (60) projects through a circular slot (62) in the grip lever plate (28) of the grip lever controlling the anvil (30).

## Revendications

1. Ciseaux à prise pour roses comprenant une lame de coupe (16) reliée à la première poignée (10), laquelle lame coopère avec une enclume (30) commandée par la seconde poignée (24) et avec une pièce de serrage (50), qui peut se déplacer avec la lame de coupe (16) autour d'un pivot (22) et présente une plaque de serrage (52) pré-tendue de manière élastique contre l'enclume (30), caractérisés en ce que la pièce de serrage (50) est formée d'une pièce de matière plastique à caractère élastique propre qui entoure la lame de coupe (16) par le côté arrière et s'engage sur celle-ci par une aile (54), en ce que la pièce de serrage (50) se prolonge vers le bas par un bras de ressort (56) qui se termine par une plaque d'appui (58) qui présente un orifice traversé par le pivot (22) en sorte que la plaque d'appui (58) soit fixée sans solution de continuité au regard du levier de préhension (26) commandant l'enclume (30) et en ce que la plaque d'appui (58) s'enclenche par une cheville moulée par injection (60) dans un orifice de la platine (14) du bras (12) du levier de préhension de la lame de coupe (16) en sorte que la plaque d'appui (58) soit raccordée à la première poignée (10) de manière à ne pouvoir tourner.

2. Ciseaux à prise pour roses selon la revendication 1, caractérisés en ce que le bras de ressort (56) a une forme courbe en arc autour de l'axe de rotation (52).

3. Ciseaux à prise pour roses selon la revendication 1, caractérisés en ce que la cheville (60) passe à travers une fente (62) en forme d'arc de cercle de la platine (28) du levier de préhension commandant l'enclume (30).
